# FASCICULE DE BREVET EUROPEEN

(11) **EP 2 630 446 B1**
(45) Date de publication et mention de la délivrance du brevet: **27.08.2014**
(21) Numéro de dépôt: 11785088.3
(22) Date de dépôt: 19.10.2011
(51) Int. Cl.: G01C 21/36

(54) **SYSTÈME ET PROCÉDÉ DE CARTOGRAPHIE AVEC REPRÉSENTATION APPARIÉE CONTINUE**
KARTOGRAFIESYSTEM UND VERFAHREN MIT DURCHGEHENDER GEPAARTER DARSTELLUNG
CARTOGRAPHY SYSTEM AND METHOD WITH CONTINUOUS PAIRED REPRESENTATION

(30) Priorité: 21.10.2010 FR 1004169
(43) Date de publication de la demande: 28.08.2013
(73) Titulaire: Michelin Travel Partner, 92100 Boulogne-Billancourt (FR)
(72) Inventeur: HAYOT, Pierre, F-63040 Clermont-Ferrand Cedex 9 (FR)
(74) Mandataire: Bauvir, Jacques
(86) Numéro de dépôt international: PCT/IB2011/002509
(87) Numéro de publication internationale: WO 2012/052830

(56) Documents cités:
- US-B1- 6 199 014

## Description

### DOMAINE TECHNIQUE DE L'INVENTION

La présente invention concerne un procédé et un système de génération automatique de cartes d'itinéraires. Elle concerne plus particulièrement un procédé permettant de générer des cartes d'itinéraires complètes et exhaustives, utilisant un espace mémoire restreint.

### ETAT DE LA TECHNIQUE ANTERIEURE

Les dispositifs, procédé et système de préparation de cartes d'itinéraires sont bien connus et sont même devenus des outils d'usage courant pour un nombre considérablement important d'usagers de la route.

Par exemple, le document WO2006/042688 décrit un procédé de génération d'itinéraires indiquant, en plus d'un itinéraire optimal entre deux points donnés, les points de voisinage le long de cet itinéraire. Outre la présence des points de voisinage, qui permettent de faciliter le suivi de l'itinéraire grâce au repérage de points faciles à visualiser le long du tracé, ce document décrit un mode de présentation classique des itinéraires préparés avant le départ, à savoir une impression sur une ou plusieurs pages comportant des instructions écrites, et une ou plusieurs pages comportant des cartes routières sur lesquelles l'itinéraire établi est mis en évidence, par exemple par surlignage. Bien que ce type d'outil soit utile pour la préparation d'un déplacement, en permettant au conducteur de prendre connaissance de façon globale du parcours à venir, plusieurs inconvénients sont à noter lors de la phase de suivi de l'itinéraire sur la route. Pour un conducteur ou pour un passager agissant en tant que copilote, la manipulation de plusieurs pages pour un même secteur d'itinéraire est peu pratique. Par ailleurs, la lecture et la compréhension des instructions détaillées, sans relation précise avec la carte de l'itinéraire à effectuer, peuvent parfois être fastidieuses. Enfin, des détails visuels précis sur les manoeuvres à effecteur sont en général absents, causant parfois des risques d'erreur dans l'interprétation des instructions. Enfin, si un tel itinéraire, avec format cartographique complet doit être traité, sauvegardé ou transmis à un dispositif portable, la capacité mémoire, la puissance et la consommation de ressources au niveau du réseau requises seront relativement importantes, ce qui peut restreindre la liste des appareils compatibles. La consommation de bande passante imposée au réseau induit des coûts techniques tant du côté du dispositif qui reçoit les données que du côté du système qui procure les données. Une autre restriction provient du temps de transfert qui devient lui aussi excessif en raison des limitations techniques de débit des réseaux.

Le document FR 2 796 746 décrit un système d'affichage d'un itinéraire comportant des moyens de génération d'informations de carte de région limitée en forme d'une bande s'étendant le long d'un itinéraire. La largeur de la bande est adaptée en fonction de la capacité de mémorisation d'information du dispositif. Un tel dispositif ne permet cependant pas d'optimiser le format de la carte puisgu'il s'agit uniquement de procéder à une extraction de données en conservant le format initial. Par ailleurs, aucune explication ou instruction n'est fournie pour faciliter le suivi de cet itinéraire.

Le document US2006/0271277 décrit une carte de planification de voyage ou d'itinéraire comprenant l'affichage d'un itinéraire et d'éléments complémentaires à cet itinéraire, tels que des informations concernant les hôtels, les restaurants, les sites touristiques, etc. Ces données complémentaires sont intéressantes pour assurer le confort de l'agrément des passagers du véhicule, mais ne permettent pas de faciliter le suivi de l'itinéraire en tant que tel.

Le document US 6199014 décrit un système de navigation dans lequel les manoeuvres à effectuer au cours d'un itinéraire sont affichées à la fois sous forme schématique et sous forme d'instructions écrites.

Ainsi, de manière générale, les procédés existants sont peu ergonomiques et sont généralement gourmands en capacité mémoire.

Pour pallier ces différents inconvénients, l'invention prévoit différents moyens techniques.

### EXPOSE DE L'INVENTION

Tout d'abord, un premier objet de l'invention consiste à prévoir un procédé de génération de cartes d'itinéraires permettant de générer des cartes d'itinéraires occupant un espace mémoire réduit ou minimalisé.

Un autre objet de l'invention consiste à prévoir un procédé de génération de cartes d'itinéraires avec une ergonomie optimisée, facilitant la compréhension et l'utilisation, en toute sécurité.

Encore un autre objet de l'invention consiste à prévoir un système de génération de cartes d'itinéraires occupant une surface minimale, mais sans affecter la clarté ou la qualité générale des données contenues.

Pour ce faire, l'invention prévoit un procédé de génération automatique de cartes d'itinéraires selon les revendications annexées.

Grâce à ce procédé, on formate les données cartographiques de façon à ce que les tronçons correspondant sensiblement au parcours permettant de suivre une instruction soient agencés axialement sensiblement vis-à-vis ladite instruction. Une telle mise en oeuvre permet des gains de place substantiels en évitant d'utiliser de la surface utile pour afficher des données non indispensables, voire peu ou pas utiles pour suivre l'itinéraire. L'utilisation d'une représentation schématique utilisant quelques tronçons clés, plutôt qu'un jeu de cartes de la zone couverte par l'itinéraire et des parties de cette zone, permet de réduire de façon considérable la capacité mémoire et la puissance requises pour transmettre, stocker et/ou utiliser les cartes produites. Ainsi, un plus grand nombre de dispositifs sont susceptibles de pouvoir afficher les cartes générées par le procédé.

Le procédé confère une très grande souplesse pour l'agencement, notamment l'orientation des manoeuvres. La lecture et la compréhension de l'itinéraire sont grandement facilitées. Les représentations cartographiques obtenues selon le procédé permettent de représenter schématiquement les manoeuvres successives à différents niveaux de grossissement et avec un alignement général le long de l'axe d'orientation.

De manière avantageuse, l'étape de repérage axial permettant d'aligner la représentation schématique associée est avantageusement réalisée par une mesure de l'espacement axial requis pour le positionnement de l'instruction sur le support.

Selon un mode de réalisation avantageux, la représentation schématique comporte uniquement les tronçons identifiés pour la réalisation de l'itinéraire.

L'extraction de l'itinéraire du reste des éléments cartographiques confère une liberté totale de représentation des segments, tant du point de vue dimensionnel qu'angulaire.

Selon un autre mode de réalisation avantageux, par exemple en cas d'incompatibilité entre la surface initiale requise pour positionner une représentation schématique non modifiée d'une manoeuvre et la surface attribuée, le formatage de l'itinéraire comporte une étape de transformation, permettant de modifier au moins une des caractéristiques d'agencement d'au moins une partie des tronçons en fonction d'une part, des positions axiales des instructions et d'autre part, de la surface disponible pour la représentation schématique.

Selon un mode de réalisation avantageux, les caractéristiques d'agencement des tronçons comprennent :
- les angles de positionnement des tronçons les uns par rapport aux autres ;
- les profils des tronçons ;
- les longueurs relatives des tronçons.

Le fait de modifier l'agencement relatif des tronçons, leur longueur et/ou leur position angulaire, et ainsi d'obtenir une représentation adaptée de l'itinéraire, n'affecte pas d'autres éléments que ceux de l'itinéraire lui-même, contrairement au cas où l'itinéraire serait intégré à une carte. Pour l'utilisateur, qui ne cherche pas une représentation fidèle de la réalité physique, mais plutôt un guide directionnel facile à interpréter, ces modifications d'échelle, de forme et/ou d'angle n'engendrent que peu ou pas d'inconvénients. En outre, ces modifications sont peu perceptibles depuis le véhicule lors du suivi de l'itinéraire.

Dans une variante de réalisation, la représentation schématique comporte en plus des tronçons directement connectés à ceux de l'itinéraire prévu. Les tronçons connectés concernés sont de préférence ceux où des manoeuvres sont prévues et ceux précédant une manoeuvre de type croisement avec passage à niveau.

Le procédé comprend les étapes pour détecter les manoeuvres permettant d'effectuer l'itinéraire et pour obtenir les données d'instructions correspondant aux manoeuvres à effectuer.

L'alignement axial est de préférence effectué à partir du point d'entrée de la manoeuvre.

Le procédé comprend par ailleurs une étape d'agencement des tronçons de l'itinéraire de façon à procurer à la représentation schématique de l'itinéraire une orientation sensiblement selon l'axe d'orientation. Par exemple, un couloir virtuel d'alignement est défini, dans la zone prévue pour représenter schématiquement l'itinéraire. Les tronçons sont adaptés au couloir pour faire en sorte que les manoeuvres soient comprises dans les limites internes de ce dernier. S'il n'est pas possible de procéder à une adaptation des tronçons pour respecter les limites du couloir, l'itinéraire est de préférence coupé, par exemple un peu après la dernière manoeuvre respectant ces limites.

Dans un autre mode de réalisation avantageux, la distance à parcourir entre deux points d'instructions est intégrée schématiquement le long de l'axe d'orientation pour chaque portion d'itinéraire. L'axe d'orientation est avantageusement représenté entre les deux côtés du support, ou encore sur un des côtés, à gauche ou à droite du support.

L'invention prévoit également un système de génération de cartes d'itinéraires suivant la revendication 4 annexée, pour la mise en oeuvre du procédé préalablement décrit, comportant un accès à des données de cartographie routière en relation avec au moins une zone géographique donnée et permettant de déterminer une pluralité de cartes d'itinéraires dans cette zone, au moins un microprocesseur et au moins une mémoire de travail, un module de calcul d'itinéraire, et comportant par ailleurs :
- un module de définition d'axe d'orientation et de zones du support, pour définir un axe d'orientation servant à orienter l'agencement des instructions sur le support ;
- un module de subdivision d'itinéraire, pour subdiviser l'itinéraire à cartographier en une pluralité de sections unitaires ;
- un module de formatage d'éléments d'itinéraires, pour formater la représentation schématique de l'itinéraire de façon à ce que les caractéristiques d'agencement desdits tronçons permettent de générer un tracé d'itinéraire adapté à la surface de la zone du support prévue pour disposer ladite représentation schématique, tout en permettant d'aligner les éléments d'itinéraire appariés de chaque côté de l'axe d'orientation.

Selon un mode de réalisation avantageux, le système de génération de cartes d'itinéraires comprend par ailleurs un module d'analyse du support d'affichage de carte, pour déterminer la surface disponible pour afficher la carte d'itinéraire.

Selon un autre mode de réalisation avantageux, le système de génération de cartes d'itinéraires comprend par ailleurs un module de transformation des tronçons, permettant de modifier au moins une des caractéristiques d'agencement d'au moins une partie des tronçons en fonction d'une part, des positions axiales des instructions et d'autre part, de la surface disponible pour la représentation schématique.

Dans une variante avantageuse, les caractéristiques d'agencement des tronçons comprennent :
- les angles de positionnement des tronçons les uns par rapport aux autres ;
- les profils des tronçons ;
- les longueurs relatives des tronçons.

Le système de génération de cartes d'itinéraires comprend par ailleurs :
- un module de détection de manoeuvre, pour détecter les manoeuvres à effectuer pour parcourir l'itinéraire ;
- un module de déterminations d'instructions, pour fournir les instructions correspondant à chacune des manoeuvres.

### DESCRIPTION DES FIGURES

Tous les détails de réalisation sont donnés dans la description qui suit, complétée par les figures 1 à 9, présentées uniquement à des fins d'exemples non limitatifs, et dans lesquelles :
- la figure 1 est une représentation schématique d'un système de génération de carte d'itinéraire selon l'invention ;
- les figures 2A et 2B sont des représentations schématiques complémentaires du système de la figure 1 ;
- la figure 3 est une autre représentation schématique d'un système de génération de carte d'itinéraire, montrant un environnement de travail délocalisé ;
- la figure 4A est un organigramme fonctionnel illustrant les principales étapes d'un procédé de génération de carte d'itinéraire selon l'invention ;
- la figure 4B est un organigramme fonctionnel illustrant une variante avantageuse du procédé de génération de carte d'itinéraire selon l'invention, dans laquelle les tronçons sont disposés dans un couloir d'alignement ;
- les figures 5A, 5B et 5C sont des exemples de cartes d'itinéraire selon l'art antérieur ;
- la figure 6 illustre un exemple d'une étape intermédiaire du procédé selon l'invention ;
- la figure 7 présente un exemple de carte d'itinéraire générée à l'aide d'un procédé et d'un système de génération de carte d'itinéraire selon l'invention avec le sens de lecture du haut vers le bas du support ;
- la figure 8 présente un autre exemple de carte d'itinéraire générée à l'aide d'un procédé et d'un système de génération de carte d'itinéraire selon l'invention dans lequel le sens de lecture est du bas vers le haut du support ;
- la figure 9 présente un autre exemple de carte d'itinéraire générée à l'aide d'un procédé et d'un système de génération de carte d'itinéraire selon l'invention dans lequel le sens de lecture est du haut vers le bas du support, et dans lequel l'itinéraire est coupé en deux portions afin de permettre son intégration dans un couloir d'alignement.

### DESCRIPTION DETAILLEE DE L'INVENTION

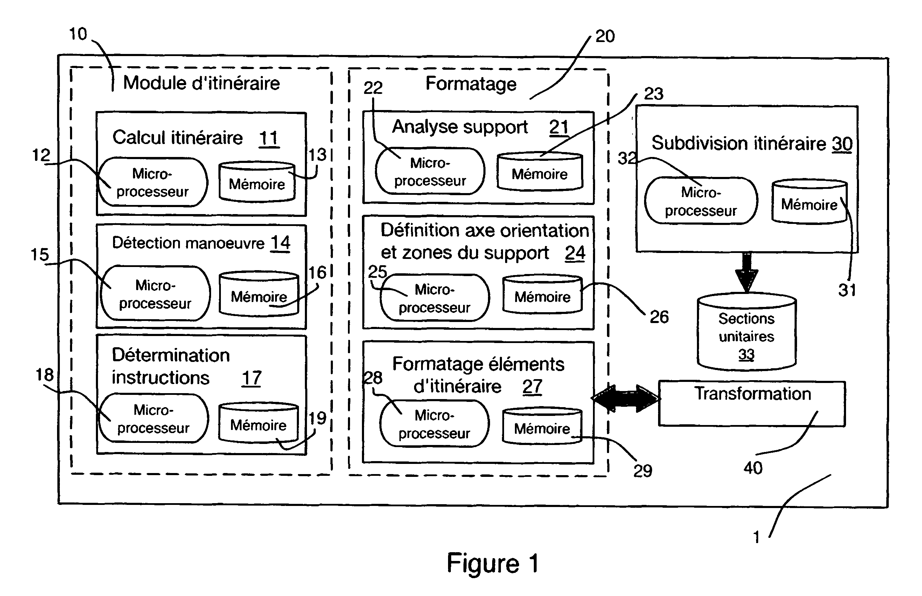

La figure 1 présente un exemple d'un mode de réalisation d'un système 1 de génération de carte d'itinéraire. On retrouve d'une part un module d'itinéraire 10, prévu pour générer toutes les données en relation avec l'itinéraire pour lequel une carte doit être produite. Le module d'itinéraire 10 comporte un module de calcul d'itinéraire 11, pourvu de moyens de calculs tel qu'un microprocesseur 12 et d'une mémoire de travail 13, un module de détection de manoeuvre 14, pourvu de moyens de calculs tel qu'un microprocesseur 15 et d'une mémoire de travail 16, et d'un module de détermination d'instruction 17, pourvus de moyens de calculs tel qu'un microprocesseur 18 et d'une mémoire de travail 19. Selon diverses variantes de réalisation, les moyens de calcul 12, 15 et 18, tout comme les mémoires de travail 13, 16 et 19 peuvent être centralisés pour tous les modules ou tout le système de génération de carte d'itinéraire, ou encore être agencés de façon externe, avec connexion aux différents modules.

Le module de calcul d'itinéraire 11 fonctionne de façon connue en soit, à l'aide d'un algorithme de détermination du plus court chemin entre deux points, tel que Dijkstra ou autre. Un tel algorithme permet, à l'aide d'un microprocesseur et des instructions requises, d'effectuer l'exploration d'un très grand nombre de possibilités (de quelques dizaines ou centaines pour des zones à faible densité et/ou pour des itinéraires courts à quelques centaines de milliers, voire plus, pour des zones à forte densité de routes et/ou pour des itinéraires longs) dans le but d'élire un itinéraire optimal en fonction de critères donnés, tels que l'itinéraire le plus court, ou le plus rapide, etc.

Une fois l'itinéraire connu, un module de détection de manoeuvre 14 permet de détecter les manoeuvres à effectuer le long de l'itinéraire en question. Par manoeuvre, on entend principalement une action de conduite d'un véhicule permettant de sélectionner un tronçon donné lorsque le conducteur se trouve face à une possibilité d'engager son véhicule vers une pluralité de tronçons (au moins deux). Le conducteur se trouve face à de multiples possibilités de poursuivre sa route, et une manoeuvre lui permet d'engager son véhicule en fonction de la direction prévue par l'itinéraire préétabli. Ainsi, le module 14 effectue un parcours virtuel de l'itinéraire établi par le module 11, et identifie les points ou noeuds où des tronçons multiples sont rattachés. Il peut s'agir d'intersection de routes, de sorties ou d'entrée sur autoroutes, et bifurcations, etc. Les manoeuvres sont déterminées de façon connues en soit. Pour un rond-point, il est entendu qu'une pluralité de manoeuvres simples sont en général impliquées, depuis l'entrée sur le rond-point, puis au passage de chaque sortie, impliquant à chaque fois une manoeuvre consistant soit à rester sur le rond-point ou à en sortir, jusqu'à la sortie effective du rond-point. Dans le présent document, les ronds-points sont considérés comme une seule manoeuvre, du type « prendre la 3^{e} sortie », consistant en fait à une manoeuvre complexe, tel qu'évoqué précédemment.

Le module 17 de détermination d'instructions effectue les associations de données entre les manoeuvres, détectées par le module de détection de manoeuvre 14, et les données routières de l'itinéraires, de façon à définir des instructions sous forme de données écrites, permettant au conducteur de prendre connaissance des données usuelles telles que les noms ou numéros de route, les directions à suivre, les repères, les distances à parcourir, et des données relatives aux manoeuvres à effectuer, tel que tourner à gauche ou à droite, prendre la X^{e} sortie, continuer tout droit, etc.

Grâce aux modules de détection de manoeuvre 14 et de détermination d'instructions 17, on peut obtenir des couples de données, ou données appariées, avec d'une part, des données relatives à une manoeuvre à afficher sous forme d'un schéma, et d'autre part des données relatives aux instructions écrites permettant d'effectuer la manoeuvre correspondante.

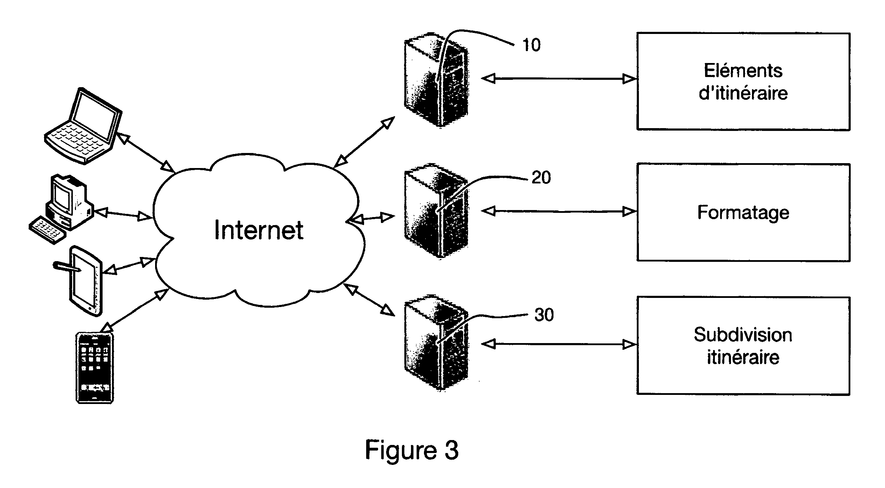

Le module 10 d'itinéraire peut être prévu de façon externe au système 1 de génération de carte d'itinéraire, soit à proximité l'un de l'autre, avec connexion directe, soit à distance l'un de l'autre, avec les moyens de connexion de type connus tels que Wifi, Wimax, par un réseau, tel qu'Internet ou un réseau de téléphonie cellulaire, etc. Selon une autre variante de réalisation, tel que montré à la figure 3, un module d'itinéraire 10 peut être commun à une pluralité d'utilisateurs utilisant des dispositifs d'affichage à distance, de type portable, comme des téléphones dits « Smartphones », PDA, dispositifs de guidage de type GPS ou autre, ordinateurs portables ou de type tablette, etc, ou fixe, tel qu'un ordinateur de bureau.

Selon d'autres variantes de réalisation, le module de calcul d'itinéraire 11, et/ou le module de détection de manoeuvre 14 et/ou le module de détermination d'instructions 17 sont séparés ou à distance, et reliés par des moyens de communications ou de connexion usuels, tel qu'évoqués précédemment. Selon encore une autre variante, les modules de calcul d'itinéraire 11, le module de détection de manoeuvre 14, et le module de détermination d'instructions 17 peuvent aussi être combinés en un seul ou deux modules.

Le bloc de formatage 20 comporte un module d'analyse de support 21, pourvu de moyens de calculs tel qu'un microprocesseur 22 et d'une mémoire de travail 23, un module de définition d'axe d'orientation et de zones support 24, pourvu de moyens de calculs tel qu'un microprocesseur 25 et d'une mémoire de travail 26, et d'un module de formatage d'éléments d'itinéraire 27, pourvu de moyens de calculs tel qu'un microprocesseur 28 et d'une mémoire de travail 29. Selon diverses variantes de réalisation, les moyens de calcul 22, 25 et 28, tout comme les mémoires de travail 23, 26 et 29 peuvent être centralisés pour tous les modules ou tout le système de génération de carte d'itinéraire, ou encore être agencés de façon externe, avec connexion aux différents modules.

Le module d'analyse de support 21 détecte le type et les caractéristiques d'affichage du support prévu pour affichage de la carte d'itinéraire, afin que le format de la carte d'itinéraire puisse être adapté. En fonction des données recueillies par le module d'analyse de support 21, le module de définition d'axe d'orientation et de zones du support 24 définit tout d'abord un axe d'orientation, servant à définir une direction préférentielle d'orientation sur le support, selon laquelle les différentes manoeuvres de l'itinéraire seront agencées ou alignées. L'axe d'orientation permet de séparer deux zones disposées côte à côte l'une de l'autre. Ces deux zones sont prévues pour contenir les éléments d'itinéraires appariés : d'un côté, les instructions écrites, et de l'autre, les manoeuvres correspondantes. Le module de formatage d'éléments d'itinéraires 27 effectue le formatage des éléments d'itinéraires appariés, dans un format adapté au support utilisé et en fonction de l'axe d'orientation défini.

Le module 20 de formatage peut être prévu de façon externe au système 1 de génération de carte d'itinéraire, soit à proximité l'un de l'autre, avec connexion directe, soit à distance l'un de l'autre, avec les moyens de connexion de type connus tels que Wifi, Wimax, par un réseau, tel qu'Internet ou un réseau de téléphonie cellulaire, etc. Selon une autre variante de réalisation, tel que montré à la figure 3, un module de formatage 20 peut être commun à une pluralité d'utilisateurs utilisant des dispositifs d'affichage à distance, de type portable, comme des téléphones dits « Smartphones », PDA, dispositifs de guidage de type GPS ou autre, ordinateurs portables ou de type tablette, etc, ou fixe, tel qu'un ordinateur de bureau.

Un module de subdivision d'itinéraire 30 effectue une séparation de l'itinéraire 600 à afficher en une pluralité de sections unitaires 510. Le mode et les critères de séparation sont présentés plus en détails plus loin dans ce document. Les sections unitaires générées sont stockées dans une mémoire ou unité de stockage de sections unitaires 33.

Le module 30 de subdivision d'itinéraire peut être prévu de façon externe au système 1 de génération de carte d'itinéraire, soit à proximité l'un de l'autre, avec connexion directe, soit à distance l'un de l'autre, avec les moyens de connexion de type connus tels que Wifi, Wimax, par un réseau, tel qu'Internet ou un réseau de téléphonie cellulaire, etc. Selon une autre variante de réalisation, tel que montré à la figure 3, un module de subdivision d'itinéraire 30 peut être commun à une pluralité d'utilisateurs utilisant des dispositifs d'affichage à distance, de type portable, comme des téléphones dits « Smartphones », PDA, dispositifs de guidage de type GPS ou autre, ordinateurs portables ou de type tablette, etc, ou fixe, tel qu'un ordinateur de bureau.

Un module de transformation des tronçons 40, permettant de modifier des caractéristiques des tronçons en fonction du format d'affichage, est également prévu. Tel que décrit plus loin, ce module permet d'adapter diverses caractéristiques des tronçons, tels que la forme, la longueur, l'angle, etc, par rapport aux éléments adjacents, pour permettre de réduire la surface requise pour disposer la représentation schématique de la manoeuvre à effectuer de façon compacte, sans perte des données informatives requises pour assurer le suivi de l'itinéraire. Le fait que la manoeuvre affichée soit extraite de la carte routière, et que seulement quelques tronçons soient présentés plutôt qu'une carte classique, permet d'effectuer des modifications de formes sans affecter l'agencement général de la carte et sa lisibilité. Le module de transformation des tronçons 40 est avantageusement intégré ou relié au module de formatage d'éléments d'itinéraires 27.

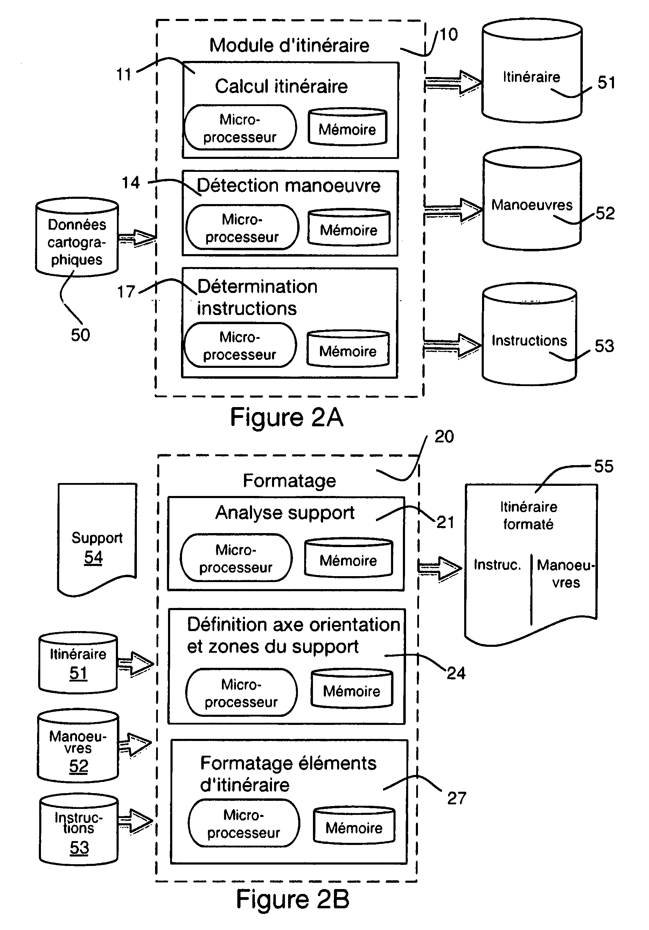

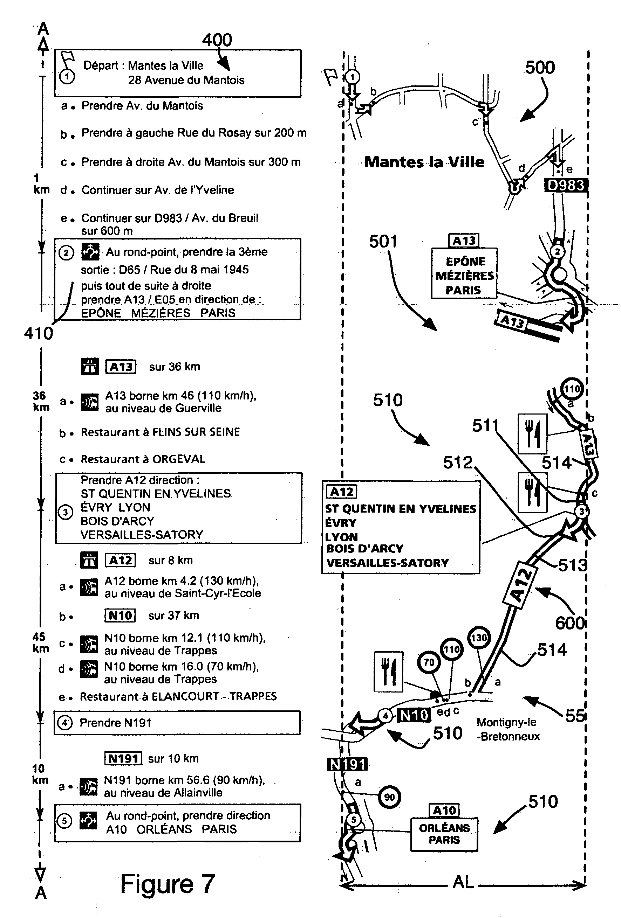

Les figures 2A et 2B illustrent de façon schématique les principales fonctions du module d'itinéraire 10 et du bloc de formatage 20. A la figure 2A, on remarque que les données cartographiques brutes 50 sont traitées par le module d'itinéraire 10 pour obtenir les données de l'itinéraire 51 à effectuer, les données des manoeuvres 52 correspondantes, et les données des instructions 53 associées à ces manoeuvres. A la figure 2B, on observe le bloc de formatage 20 qui, à partir des données 54 du support, de l'itinéraire 51, des manoeuvres 52 et des instructions 53, permet d'obtenir un itinéraire formaté 55 comportant, d'une part, des instructions 410 et d'autre part, des représentations schématiques 501 de ces instructions, tel que présenté plus en détails en relation avec les figures 7 à 12.

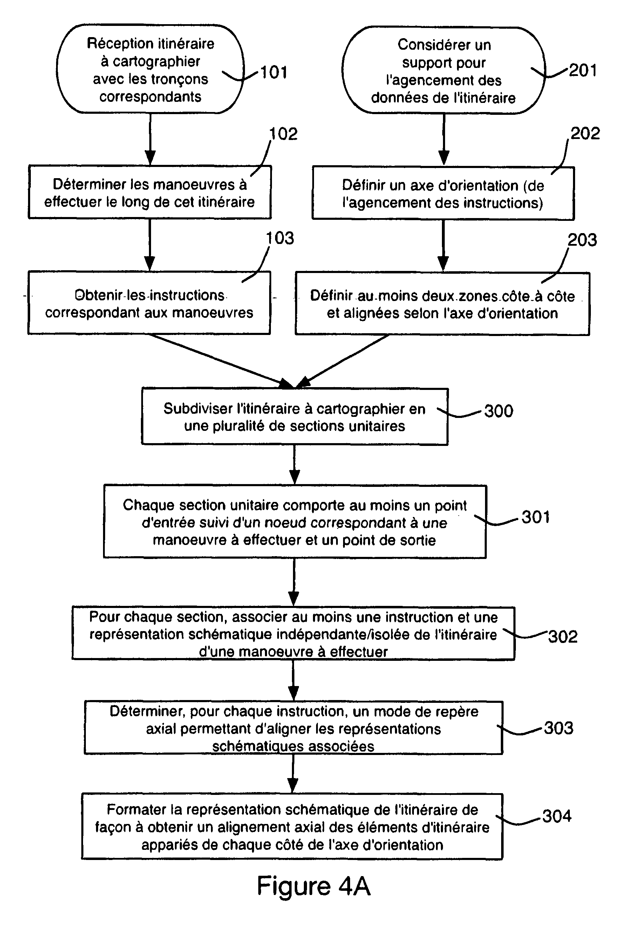

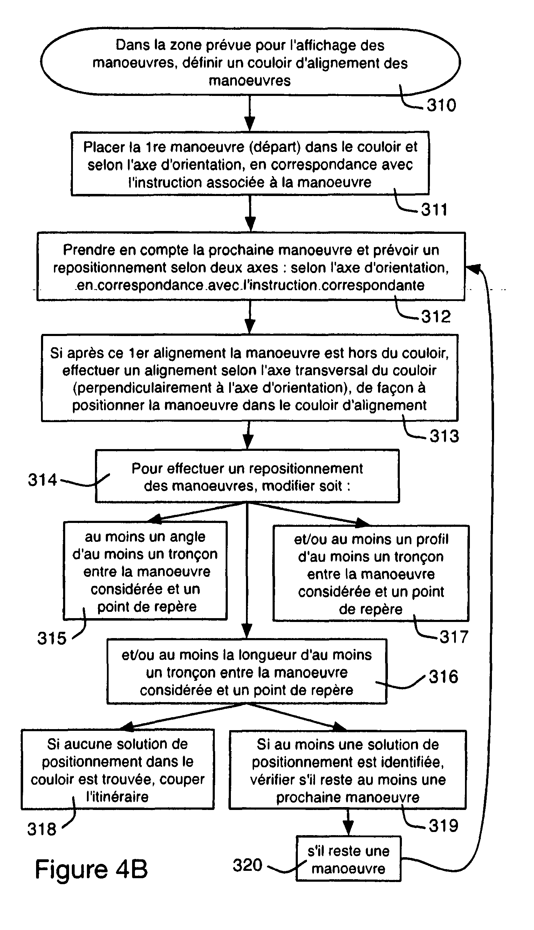

La figure 4 présente, de façon successive, les principales étapes du procédé selon l'invention. D'une part, aux étapes 101 à 103, les données en relation avec l'itinéraire 51 sont calculées. D'autre part, aux étapes 201 à 203, les données concernant le type de support 54 et ses caractéristiques dimensionnelles sont obtenues.

De façon plus détaillée, à l'étape 101, après réception par un module de calcul d'itinéraire 11 des données cartographiques digitales des tronçons et des noeuds permettant de reconstituer une représentation de l'itinéraire calculé, les manoeuvres à effectuer le long de l'itinéraire sont déterminées à l'étape 102 par un module de détermination de manoeuvre 14. Les instructions, notamment écrites, concernant les manoeuvres identifiées sont par ailleurs identifiées à l'étape 103 par un module de détermination d'instructions 17. On obtient ainsi des couples d'éléments d'itinéraires appariés constitués d'une part, des instructions écrites permettant d'expliquer au conducteur les manoeuvres à effectuer tout au long de l'itinéraire, et d'autre part, des manoeuvres correspondantes, pour affichage sous forme schématique.

Les données en relation avec le meilleur chemin à parcourir pour constituer l'itinéraire entre les points de départ et d'arrivée peuvent être calculées préalablement à l'étape 101 par le module d'itinéraire 10 ou par tout autre dispositif ou système de détermination d'itinéraire. Selon une variante de réalisation, elles peuvent être calculées par le module d'itinéraire 10 lors de l'étape 101.

Il en est de même pour les données relatives aux manoeuvres 52 et aux instructions 53, qui peuvent être obtenues préalablement à la mise en oeuvre du procédé, ou au cours des premières étapes de celui-ci.

Les données concernant le support utilisé 54 pour l'affichage de la carte d'itinéraire sont fournies au module d'analyse du support 21 pour effectuer une détection du type de support, comme par exemple papier pour impression, ou écran pour affichage à l'aide des pixels de l'écran, ou tout autre mode permettant d'afficher ou de montrer ou d'illustrer la carte d'itinéraire produite. Le module d'analyse du support 21 permet par ailleurs d'obtenir les dimensions du support prévu. Dans les cas où une communication bilatérale n'est pas possible avec le support, des valeurs par défaut peuvent être prises en compte, comme par exemple un format A4 pour un support par impression sur papier. Pour que les éléments d'itinéraires appariés puissent être agencés de façon optimale sur le support, une étape de définition d'un axe d'orientation du support est prévue, avantageusement à l'aide d'un module de définition d'axe d'orientation et de zones du support 24. Le module 24 prévoit l'axe d'orientation de préférence de façon à ce que ce dernier puisse servir à délimiter une zone de chaque côté de celui-ci. Les deux zones, 400 et 500 (figure 7 et suivantes) peuvent être de surfaces égales ou non, en fonction des paramètres prédéfinis ou en fonction de choix laissés à l'utilisateur, à l'aide de menus de formatage qui lui sont proposés.

Aux étapes 300 et 301, l'itinéraire à cartographier est subdivisé en une pluralité de sections unitaires, par un module de subdivision 30 ; ces dernières sont stockées dans une mémoire 33 de sections unitaires. La subdivision est effectuée de sorte que chaque section unitaire 510 comporte au moins un point d'entrée 511, suivi d'un noeud 512 correspondant à une manoeuvre à effectuer, et un point de sortie 513, comme on le voit aux figures 7 et suivantes.

A l'étape 302, on associe, pour chaque section, au moins une instruction et une représentation schématique isolée ou extraite de l'itinéraire de la manoeuvre correspondante à effectuer pour suivre l'itinéraire. La représentation schématique est extraite de l'itinéraire global à effectuer. L'extraction consiste à conserver au minimum les tronçons identifiés pour la réalisation de l'itinéraire. Les autres tronçons de la carte routière, le fond cartographique, les autres données ainsi que le format de la carte routière, ne sont de préférence pas représentés. Le fait de n'utiliser que les tronçons directement utiles plutôt qu'une représentation cartographique détaillée classique sur laquelle l'itinéraire est surligné confère une très grande souplesse pour configurer et formater la manoeuvre à afficher. En effet, il est possible de raccourcir un ou plusieurs tronçons, sans modifier la longueur d'autres tronçons voisins ou adjacents. Les changements de longueur peuvent être effectués sans tenir compte de contraintes d'échelles, de sorte que certains tronçons sont raccourcis plus ou moins que d'autres, tandis que d'autres tronçons peuvent même être allongés. Les modifications peuvent aussi impliquer des changements d'angles de certains tronçons, et même des changements de forme. Le fait que l'itinéraire soit isolé de la carte routière correspondante libère de la contrainte du respect des formes, des angles et des dimensions des tronçons. L'unique contrainte est l'itinéraire lui-même. Cela signifie qu'il faut de préférence éviter d'induire des croisements qui n'existent pas, ni supprimer des croisements locaux qui sont perceptibles sur le terrain par les utilisateurs.

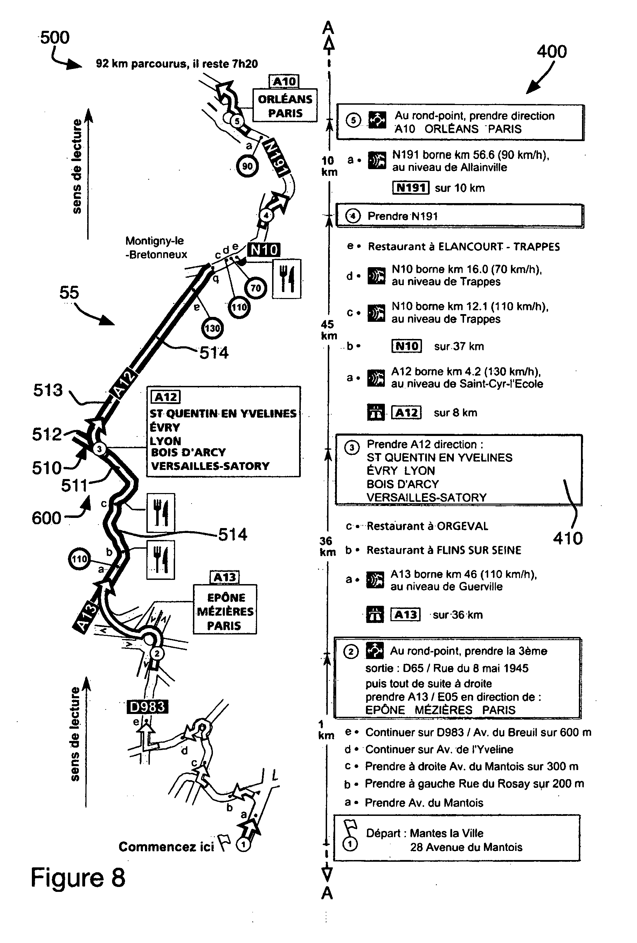

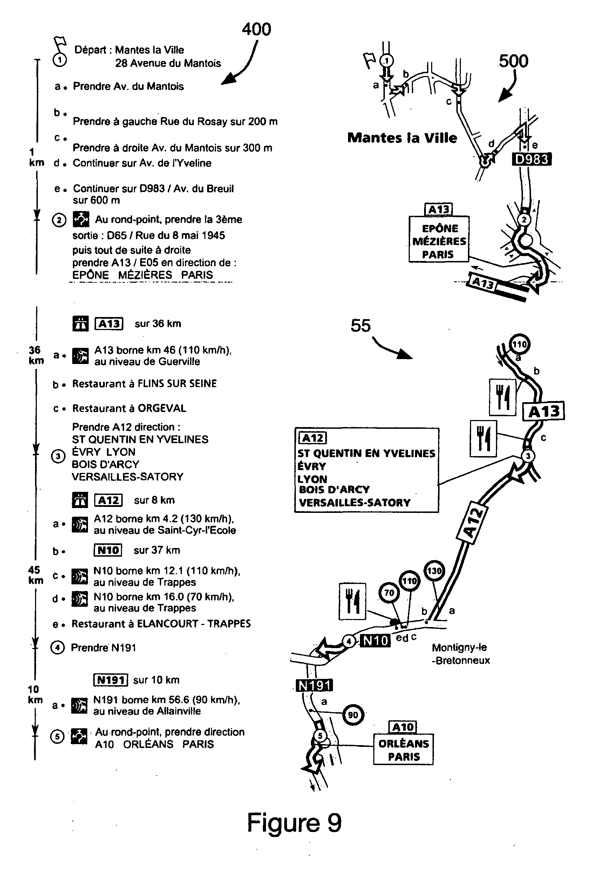

Dans une variante de réalisation, le représentation schématique de la manoeuvre comporte en plus d'autres tronçons, par exemple des tronçons directement connectés à ceux de l'itinéraire prévu, ou des tronçons importants, susceptibles de servir de repères ou références pour faciliter le suivi de l'itinéraire. On représente aussi avantageusement les tronçons où des manoeuvres à venir sont prévues. Par ailleurs, pour faciliter le suivi de l'itinéraire, les sections unitaires peuvent comporter une portion d'itinéraire sans manoeuvre à effectuer 514 (figures 8 et 9), en aval et/ou en amont de la portion d'itinéraire de la manoeuvre elle-même. Ces portions sans manoeuvre peuvent être représentées jusqu'à la manoeuvre suivante.

Dans certains cas, comme par exemple pour des représentations à sensiblement grande échelle pour des zones résidentielles, des zones de rues sans nom ou avec des noms peu visibles depuis la route lorsque le véhicule effectuant l'itinéraire se déplace, une pluralité de sections unitaires sont combinées pour représentation sur un schéma unique. Ceci permet d'éviter de multiplier le nombre de schémas de manoeuvres. Par ailleurs, ce type de regroupement correspond souvent à des instructions écrites succinctes en série, du type « tourner à gauche sur la rue XXX, puis à droite sur la rue YYYY », etc. La figure 7, décrite en détails plus loin, présente un exemple d'une telle combinaison.

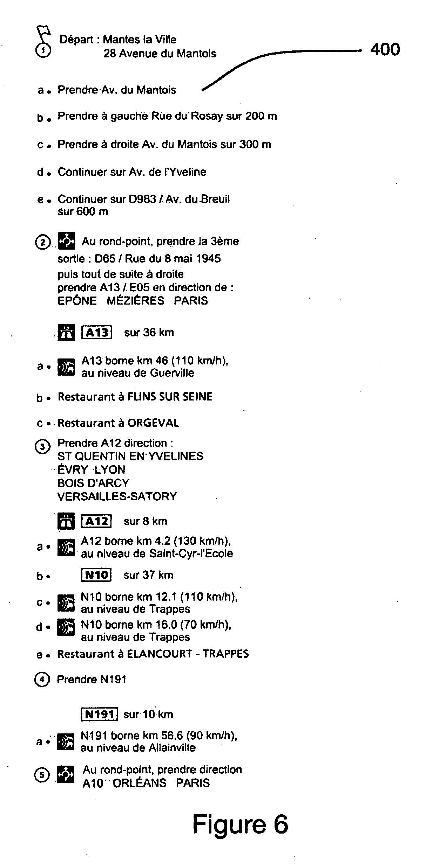

La carte de l'itinéraire est formatée de façon à agencer, dans l'ordre de réalisation prévu, les couples d'éléments d'itinéraire appariés, avec d'un côté 400 de l'axe d'orientation A-A, les instructions écrites 410, et de l'autre côté 500 de l'axe d'orientation A-A, les représentations schématiques des manoeuvres correspondantes. Les couples sont agencés de façon à ce que les éléments correspondants soient sensiblement alignés les uns avec les autres. Dans l'exemple de mise en oeuvre illustré à la figure 4, à l'étape 303, on détermine, pour chaque instruction, un mode de repérage axial permettant d'aligner les représentations schématiques associées. Pour ce faire, on peut par exemple évaluer ou mesurer l'espacement axial requis pour positionner les instructions de chacune des sections les unes après les autres d'un côté de l'axe d'orientation. On obtient ainsi une référence qui permet d'ajuster ou d'adapter le format des diverses représentations schématiques des manoeuvres en fonction de l'espace disponible. La figure 6 montre un exemple d'un côté 400 tel qu'il serait affichable avant formatage du côté 500 qui sera établi en fonction de l'agencement axial du premier côté 400.

Ainsi, à l'étape 304, l'itinéraire est formaté de façon à ce que, pour chaque section, l'agencement des tronçons soit sensiblement adapté à l'espacement axial. Ainsi, pour une section unitaire donnée, en fonction de la surface disponible les longueurs, formes et angles des différents tronçons, sont adaptés pour permettre d'intégrer tous les tronçons dans l'espace attribué. On obtient une représentation adaptée, construite en fonction d'une utilisation optimale de la surface disponible. Un module de transformation 40 est avantageusement utilisé pour ces opérations de modifications de tronçons.

La figure 4B illustre les étapes d'un exemple de réalisation permettant un agencement des tronçons dans un espace restreint. A l'étape 310, un couloir d'alignement des manoeuvres AL est défini. La figure 7 montre un exemple d'un tel couloir, délimitant une zone favorite pour positionner les manoeuvres dans une zone restreinte spécifiquement prévue à cette fin. Ce couloir est de préférence coaxial à l'axe d'orientation. Dans une variante, le couloir est très étroit, et peut même être assimilé à une droite, de façon à prévoir une disposition sensiblement linéaire des manoeuvres.

A l'étape 311, la première manoeuvre, par exemple le départ, est positionnée dans le couloir d'alignement AL. Pour respecter l'appariement de la manoeuvre avec l'instruction, le positionnement axial de la première manoeuvre correspond sensiblement à l'instruction correspondante.

La manoeuvre suivante est agencée selon les étapes 312 et 313. Tout d'abord, une première contrainte est prévue de façon à ce que cette manoeuvre soit sensiblement alignée axialement avec l'instruction correspondante. Une seconde contrainte est prévue pour prévoir un positionnement de cette manoeuvre dans les limites du couloir d'alignement AL. Les réagencements requis sont donc effectués. Ce double positionnement de la manoeuvre implique de modifier les agencements de tronçons conduisant à cette manoeuvre. Dans une variante de réalisation, à l'étape 312, la prochaine manoeuvre prise en compte est la prochaine manoeuvre non urbaine. De cette façon, on conserve une forme d'unité pour les manoeuvres se trouvant dans une même portion urbaine, facilitant ainsi leur prise en compte. En effet, très souvent, ces manoeuvres se succèdent rapidement et il suffit au conducteur de savoir comment aborder la succession de changements de direction en montrant leurs dispositions respectives, de façon fidèle à la réalité.

Selon un autre mode de réalisation préférentiel, pour chaque manoeuvre, le point d'entrée se situe dans un même demi-plan, par exemple le demi-plan inférieur, de façon à standardiser la présentation et ainsi faciliter l'interprétation de l'itinéraire.

Les étapes 314, 315, 316 et 317 montrent des exemples de mise en oeuvre permettant d'effectuer les repositionnements de manoeuvres pour respecter ces critères. Ainsi, le module de transformation 40 peut privilégier une approche selon laquelle les longueurs des tronçons sont modifiées, en général de façon à raccourcir ces derniers. La transformation peut prévoir des modifications soit pour tous les tronçons, soit pour les tronçons les plus longs, soit de façon progressive, en raccourcissant davantage les tronçons les plus longs et/ou ceux pour lesquels l'alignement est le plus défavorable. Selon une variante, la transformation permet de modifier les angles des tronçons les uns par rapport aux autres, pour faire en sorte de réduire la surface requise, en fonction de l'espace disponible. Selon une autre variante, la forme des tronçons peut aussi être modifiée pour atteindre ce même but. Enfin, ces différents modes peuvent avantageusement être combinés pour optimiser la surface requise tout en minimisant les déformations par rapport à l'agencement apparaissant sur une carte classique. Les modifications des tronçons sont effectuées à partir d'un point de repère, qui peut être la première manoeuvre ou encore une manoeuvre intermédiaire entre la première manoeuvre et celle considérée.

Si, au cours de ces étapes, il est établi qu'aucune solution ne permet de respecter ces deux critères, à l'étape 318, l'itinéraire est coupé, par exemple un peu après la dernière manoeuvre placée dans le couloir de positionnement. Si au moins une solution de positionnement est identifiée, à l'étape 319, une vérification pour déterminer s'il reste au moins une prochaine manoeuvre est effectuée. Si tel est le cas, à l'étape 320, le procédé est à nouveau suivi à partir de l'étape 312, pour la prise en compte de la prochaine manoeuvre.

Selon encore une autre variante de réalisation, un second couloir, plus large que le couloir d'alignement des manoeuvres, permet de définir des limites de positionnement des tronçons entre les manoeuvres. Ceci permet de s'assurer une certaine forme d'homogénéité du format, avec des limites externes au-delà desquelles les tronçons ne peuvent pas se trouver.

A la fin de ce processus, un itinéraire unitaire reformaté est obtenu, avec les éléments d'itinéraire appariés, instructions d'un côté, et représentation schématique de l'autre, alignés pour former un agencement tel que les manoeuvres sont sensiblement en vis-à-vis avec les instructions correspondantes. Différentes variantes de formatage de cartes d'itinéraires seront présentées ultérieurement, à titre d'exemples non limitatifs, en relation avec les figures 7 à 9.

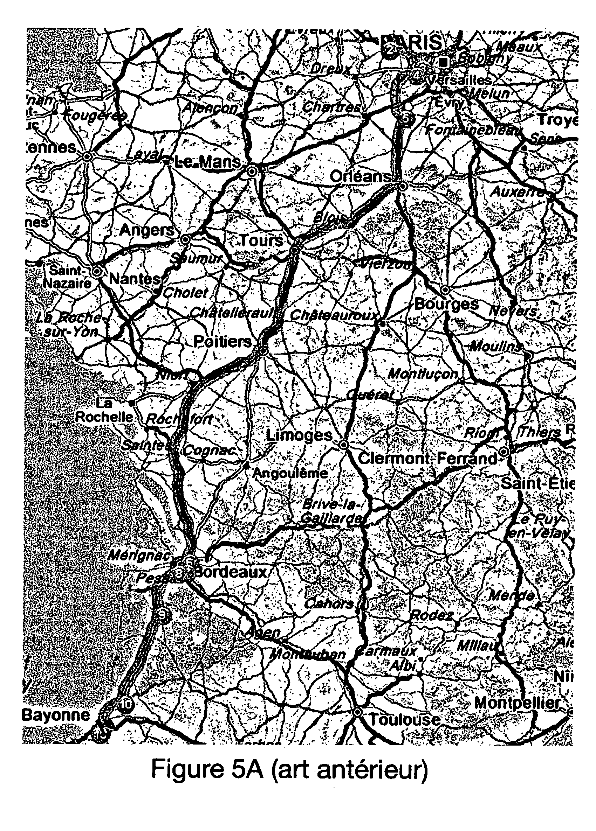

La figure 5A montre un exemple d'une carte d'itinéraire selon les techniques de calcul et d'affichage connues. On observe que l'itinéraire à parcourir est indiqué par un trait particulier appliqué sur la route de l'itinéraire. Ce trait est appliqué sur une carte routière classique, comportant tous les détails usuels tels que les noms de lieu, et parfois les numéros des routes principales. Une telle carte requiert en général une importante capacité mémoire et présente une ergonomie restreinte. Il est en effet souvent difficile de distinguer clairement le parcours choisi du reste des données affichées. Par ailleurs, du fait de l'utilisation d'une carte en format standardisé, il n'est pas possible d'effectuer des modifications de formes sans affecter les noeuds et tronçons se trouvant dans la zone environnante.

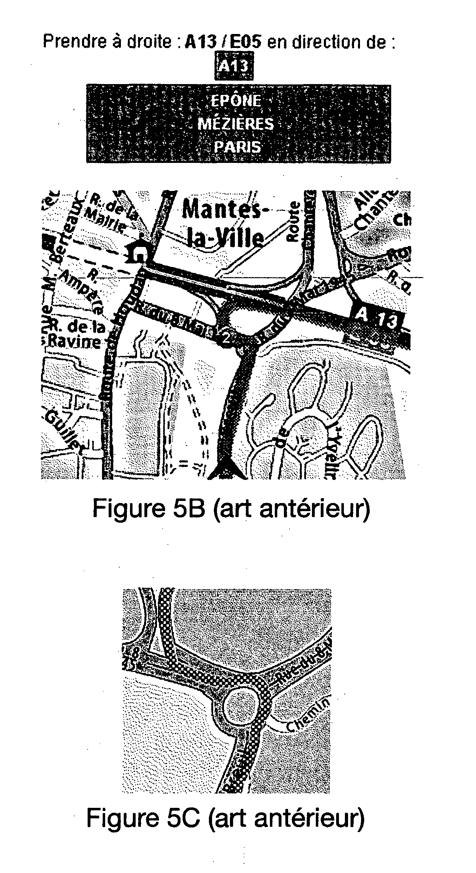

La figure 5B montre un exemple selon la technique antérieure d'affichage d'une manoeuvre avec les données textuelles correspondantes. Ici encore, l'utilisation nécessaire de l'ensemble des cartes détaillées implique la mise à disposition d'une importante capacité mémoire.

La figure 5C illustre un exemple d'affichage détaillé selon la technique antérieure d'une manoeuvre, par grossissement de la zone où se trouve la manoeuvre à effectuer.

La figure 7 présente un premier exemple de formatage obtenu grâce au procédé préalablement décrit. On y aperçoit un exemple de carte d'itinéraire 55 générée à l'aide du procédé et du système de génération de carte d'itinéraire selon l'invention. L'axe d'orientation A-A sert à délimiter les deux zones dans lesquelles les éléments d'itinéraire sont agencés : une première zone 400 pour les données d'instructions 410, de préférence en format écrit, et une seconde zone 500 pour la représentation schématique 501 des manoeuvres correspondantes positionnées sur les zones correspondantes de l'itinéraire, reliées entre elles de façon à former un tracé d'itinéraire continu 600. Les instructions, tout comme les représentations schématiques des manoeuvres, sont agencées dans l'ordre chronologique d'exécution prévu, en suivant l'axe d'orientation A-A, dans cet exemple, du haut vers le bas du support, suivant le sens de lecture habituel. Tel que mentionné précédemment, une section unitaire 510 comporte un point d'entrée 511, un noeud 512 correspondant à une manoeuvre à effectuer, et un point de sortie 513. Pour les ronds-points, ou pour certains carrefours, un noeud peut être complexe, c'est-à-dire comporter des possibilités multiples d'engagement sur différents tronçons. Cette même figure montre par ailleurs des portions d'itinéraire sans manoeuvre 514, qui peuvent être adjointes aux représentations schématiques pour faciliter la compréhension générale de l'itinéraire et/ou pour illustrer en mode tronqué les portions d'itinéraire dans lesquelles aucune manoeuvre n'est prévue. Ces portions facilitent aussi l'établissement de liens entre les portions unitaires de façon à présenter un itinéraire sensiblement continu.

Tel qu'évoqué précédemment, l'exemple de la figure 7 illustre comment des manoeuvres simples peuvent être combinées sur une même représentation schématique. Dans cet exemple, la première portion de l'itinéraire concerne un parcours d'à peine un km, tel que montré sur l'axe A-A à l'aide des flèches. S'agissant de manoeuvres simples, s'enchaînant sensiblement rapidement, un regroupement de ces manoeuvres permet de simplifier la représentation schématique.

La figure illustre aussi le non respect des échelles cartographiques pour les différentes portions de l'itinéraire. Ainsi, sur des hauteurs de support sensiblement comparables, on montre dans un premier temps un parcours de un km, puis dans un second temps de 36 km, puis de 45 km. Cet exemple vise à fournir les éléments essentiels au conducteur pour effectuer l'itinéraire, sans pollution par des données non requises pour suivre le parcours. L'obtention des différentes portions à des échelles différentes, voire avec des tronçons réduits ou allongés ou modifiés, résulte avantageusement des transformations effectuées par le module de transformation 40, tel qu'expliqué précédemment, en relation avec les étapes 310 à 320 du procédé.

Par ailleurs, diverses données complémentaires à l'itinéraire, telles que des emplacements de restaurants et de radars sont par ailleurs fournies, d'une part dans la zone d'instruction 400 et d'autre part, avec un point correspondant à leur emplacement dans la zone correspondante de manoeuvre 500.

Dans l'exemple illustré à la figure 8 le sens de lecture est prévu de bas en haut du support, de façon à correspondre à une représentation de l'itinéraire avec la route devant le véhicule. Une telle représentation est très réaliste et instinctive et donc facile à interpréter, même avec un minimum de données. Par ailleurs, un tel type d'agencement correspond à un mode de plus en plus répandu, à savoir la représentation cartographique utilisée pour les dispositifs de guidage mobile de type GPS.

Dans les exemples des figures 7 et 8, les distances entre les manoeuvres sont indiquées à l'aide de flèches en liaison avec les sections unitaires de l'itinéraire. Les distances sont indiquées par des flèches comportant des indications du nombre de km à parcourir entre deux manoeuvres. Dans ces exemples, ces distances sont directement positionnées le long de l'axe d'orientation A-A. Egalement dans ces exemples, en plus des instructions écrites correspondant aux manoeuvres, quelques données informatives, comme par exemple des données touristiques, les emplacements de certains radars, les postes d'essence, etc, peuvent aussi être prévues, à des fins de commodité pour le conducteur et/ou les passagers.

La figure 9 présente un autre exemple de carte d'itinéraire générée à l'aide d'un procédé et d'un système de génération de carte d'itinéraire selon l'invention dans lequel le sens de lecture est du haut vers le bas du support, et dans lequel l'itinéraire a été coupé à l'étape 318 en deux portions afin de permettre son intégration dans un couloir d'alignement AL.

Les Figures et leurs descriptions faites ci-dessus illustrent l'invention plutôt qu'elles ne la limitent. L'objet de la protection demandée est défini par les revendications annexées. En particulier, l'invention et ses différentes variantes viennent d'être décrites en relation avec un exemple particulier de format comportant un axe d'orientation dans le sens vertical du support.

Néanmoins, il est évident pour un homme du métier que l'invention peut être étendue à d'autres modes de réalisation dans lesquels, en variantes, on prévoit un axe d'orientation selon une autre orientation, par exemple transversale ou diagonale.

Les signes de références dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments.

## Revendications

1. Procédé de génération automatique de cartes d'itinéraires pour système de génération de cartes d'itinéraires ayant un accès à des données de cartographie routière digitales des tronçons et des noeuds permettant de reconstituer une représentation d'un itinéraire calculé en relation avec au moins une zone géographique donnée et permettant de déterminer une pluralité de cartes d'itinéraires dans cette zone, comportant les étapes consistant à :
• recevoir un itinéraire à cartographier (101) ;
• détecter, à l'aide d'un module de détection de manoeuvre (14), les manoeuvres permettant d'effectuer l'itinéraire (102), chaque manoeuvre correspondant à une action de conduite d'un véhicule permettant de sélectionner un tronçon donné lorsque le conducteur se trouve face à une possibilité d'engager son véhicule vers une pluralité de tronçons ;
• obtenir, à l'aide d'un module de détermination d'instructions (17), les données d'instructions correspondant aux manoeuvres à effectuer (103) ;
• générer un tracé d'itinéraire (600) continu comportant des représentations schématiques (501) des manoeuvres à effectuer ;
• former des couples d'éléments d'itinéraires appariés constitués d'une part, des instructions écrites permettant d'expliquer au conducteur les manoeuvres à effectuer tout au long de l'itinéraire, et d'autre part, des manoeuvres correspondantes, pour affichage sous forme schématique ;
• effectuer un formatage des données de l'itinéraire pour un agencement sur un support comportant les étapes consistant à :
• définir, à l'aide d'un module de définition d'axe d'orientation et de zones du support (24), un axe d'orientation (A-A) servant à orienter l'agencement des données de l'itinéraire sur le support (202) et deux zones (400, 500) sur le support (203) une première zone (400) pour les données d'instructions (410), en format écrit, et une seconde zone (500) pour la représentation schématique (501) des manoeuvres correspondantes positionnées sur les zones correspondantes de l'itinéraire, reliées entre elles de façon à former un tracé d'itinéraire continu (600), les instructions et les représentations schématiques des manoeuvres, étant agencées dans l'ordre chronologique d'exécution prévu en suivant l'axe d'orientation (A-A);
• agencer les tronçons de l'itinéraire de façon à procurer à la représentation schématique de l'itinéraire une orientation sensiblement selon l'axe d'orientation ;
• formater, à l'aide d'un module de formatage d'éléments d'itinéraires (27), la représentation schématique de l'itinéraire de façon à ce que les caractéristiques d'agencement desdits tronçons permettent de générer un tracé d'itinéraire (600) adapté à la surface de la zone du support prévue pour disposer ladite représentation schématique, tout en permettant d'aligner les éléments d'itinéraire appariés de chaque côté de l'axe d'orientation (304) ;
• aligner les instructions écrites et les représentations schématiques appariées de part et d'autre de l'axe d'orientation.

2. Procédé de génération automatique de cartes d'itinéraires selon la revendication 1, dans lequel le formatage de l'itinéraire comporte une étape de transformation permettant de modifier au moins une des caractéristiques d'agencement d'au moins une partie des tronçons en fonction d'une part des positions axiales des instructions écrites (410) et d'autre part de la surface disponible pour la représentation schématique.

3. Procédé de génération automatique de cartes d'itinéraires selon la revendication 2, dans lequel les caractéristiques d'agencement des tronçons comprennent :
- les angles de positionnement des tronçons les uns par rapport aux autres ;
- les profils des tronçons ;
- les longueurs relatives des tronçons.

4. Système de génération de cartes d'itinéraires pour la mise en oeuvre du procédé selon l'une des revendications 1 à 3, comportant un accès à des données de cartographie routière (50) en relation avec au moins une zone géographique donnée et permettant de déterminer une pluralité de cartes d'itinéraires dans cette zone, au moins un microprocesseur et au moins une mémoire de travail, un module de calcul d'itinéraire (11), et comportant par ailleurs :
• un module de définition d'axe d'orientation et de zones du support (24), pour définir un axe d'orientation servant à orienter l'agencement des instructions sur le support ;
• un module de subdivision d'itinéraire (30), pour subdiviser l'itinéraire à cartographier en une pluralité de sections unitaires ;
• un module de formatage d'éléments d'itinéraires (27), pour formater la représentation schématique de l'itinéraire de façon à ce que les caractéristiques d'agencement desdits tronçons permettent de générer un tracé d'itinéraire (600) adapté à la surface de la zone du support prévue pour disposer ladite représentation schématique, tout en permettant d'aligner les éléments d'itinéraire appariés de chaque côté de l'axe d'orientation (305).

5. Système de génération de cartes d'itinéraires selon la revendication 4, comprenant par ailleurs un module d'analyse (21) du support d'affichage de carte, pour déterminer la surface disponible pour afficher la carte d'itinéraire.

6. Système de génération de cartes d'itinéraires selon l'une des revendications 4 ou 5, comprenant par ailleurs un module de transformation des tronçons (40), permettant de modifier au moins une des caractéristiques d'agencement d'au moins une partie des tronçons en fonction d'une part des positions axiales des instructions (410) et d'autre part de la surface disponible pour la représentation schématique.

7. Système de génération de cartes d'itinéraires selon la revendication 6, dans lequel les caractéristiques d'agencement des tronçons comprennent :
- les angles de positionnement des tronçons les uns par rapport aux autres ;
- les profils des tronçons ;
- les longueurs relatives des tronçons.

8. Système de génération de cartes d'itinéraires selon l'une quelconque des revendications 4 à 7, comprenant par ailleurs :
• un module de détection de manoeuvre, pour détecter les manoeuvres à effectuer pour parcourir l'itinéraire ;
• un module de déterminations d'instructions, pour fournir les instructions correspondant à chacune des manoeuvres.

## Patentansprüche

1. Verfahren zur automatischen Erzeugung von Routenkarten für ein System zur Erzeugung von Routenkarten, das einen Zugang zu digitalen Straßenkartendaten der Streckenabschnitte und der Knotenpunkte hat, die es ermöglichen, eine Darstellung einer berechneten Route zu rekonstruieren, die mit mindestens einem gegebenen geografischen Gebiet im Zusammenhang stehen und es ermöglichen, eine Vielzahl von Routenkarten in diesem Gebiet zu bestimmen, welches die folgenden Schritte aufweist:
• Empfangen einer zu kartografierenden Route (101) ;
• Detektieren, mithilfe eines Manöverdetektionsmoduls (14), der Manöver, die es ermöglichen, die Route zur realisieren (102), wobei jedes Manöver einer Fahraktion eines Fahrzeugs entspricht, die es ermöglicht, einen gegebenen Streckenabschnitt auszuwählen, wenn der Fahrer mit einer Möglichkeit konfrontiert ist, mit seinem Fahrzeug mehrere Streckenabschnitte zu befahren;
• Gewinnen, mithilfe eines Anweisungsbestimmungsmoduls (17), der Anweisungsdaten, die den durchzuführenden Manövern entsprechen (103);
• Erzeugen eines durchgehenden Routenverlaufs (600), der schematische Darstellungen (501) der durchzuführenden Manöver aufweist;
• Bilden von Paaren gepaarter Routenelemente, die einerseits aus den Textanweisungen, die es ermöglichen, dem Fahrer die entlang der gesamten Route durchzuführenden Manöver zu erklären, und andererseits aus den entsprechenden Manövern bestehen, zur Anzeige in schematischer Form;
• Durchführen einer Formatierung der Daten der Route für eine Anordnung auf einem Träger, die folgenden Schritte aufweisend:
• Definieren, mithilfe eines Orientierungsachsen- und Trägerbereichs-Definitionsmoduls (24), einer Orientierungsachse (A-A), die dazu dient, die Anordnung der Daten der Route auf dem Träger auszurichten (202), und von zwei Bereichen (400, 500) auf dem Träger (203), einem ersten Bereich (400) für die Anweisungsdaten (410) im Textformat und einem zweiten Bereich (500) für die schematische Darstellung (501) der entsprechenden Manöver, die auf den entsprechenden Bereichen der Route positioniert sind, die derart miteinander verbunden sind, dass sie einen durchgehenden Routenverlauf (600) bilden, wobei die Anweisungen und die schematischen Darstellungen der Manöver, in der vorgesehenen chronologischen Reihenfolge der Ausführung, der Orientierungsachse (A-A) folgend angeordnet sind;
• Anordnen der Streckenabschnitte derart, dass der schematischen Darstellung der Route eine Ausrichtung im Wesentlichen entlang der Orientierungsachse verliehen wird;
• Formatieren, mithilfe eines Routenelemente-Formatierungsmoduls (27), der schematischen Darstellung der Route derart, dass die Anordnungsmerkmale der Streckenabschnitte es ermöglichen, einen Routenverlauf (600) zu erzeugen, der an die Fläche des Bereiches des Trägers angepasst ist, der dafür vorgesehen ist, die schematische Darstellung anzuordnen, und gleichzeitig ermöglichen, die gepaarten Routenelemente beiderseits der Orientierungsachse zueinander auszurichten (304);
• Ausrichten der gepaarten Textanweisungen und schematischen Darstellungen beiderseits der Orientierungsachse zueinander.

2. Verfahren zur automatischen Erzeugung von Routenkarten nach Anspruch 1, wobei die Formatierung der Route einen Transformationsschritt aufweist, der es ermöglicht, mindestens eines der Anordnungsmerkmale von mindestens einem Teil der Streckenabschnitte in Abhängigkeit von einerseits den axialen Positionen der Textanweisungen (410) und andererseits der für die schematische Darstellung verfügbaren Fläche zu modifizieren.

3. Verfahren zur automatischen Erzeugung von Routenkarten nach Anspruch 2, wobei die Anordnungsmerkmale der Streckenabschnitte umfassen:
- die Positionierungswinkel der Streckenabschnitte relativ zueinander;
- die Profile der Streckenabschnitte;
- die relativen Längen der Streckenabschnitte.

4. System zur Erzeugung von Routenkarten für die Durchführung des Verfahrens nach einem der Ansprüche 1 bis 3, das einen Zugang zu Straßenkartendaten (50), die mit mindestens einem gegebenen geografischen Gebiet im Zusammenhang stehen und es ermöglichen, eine Vielzahl Routenkarten in diesem Gebiet zu bestimmen, mindestens einen Mikroprozessor und mindestens einen Arbeitsspeicher, ein Routenberechnungsmodul (11) aufweist, und außerdem aufweist:
• ein Orientierungsachsen- und Trägerbereichs-Definitionsmodul (24) zum Definieren einer Orientierungsachse, die dazu dient, die Anordnung der Anweisungen auf dem Träger auszurichten;
• ein Routenaufteilungsmodul (30) zum Aufteilen der zu kartografierenden Route in mehrere Einheitsabschnitte;
• ein Routenelemente-Formatierungsmodul (27) zum Formatieren der schematischen Darstellung der Route derart, dass die Anordnungsmerkmale der Streckenabschnitte es ermöglichen, einen Routenverlauf (600) zu erzeugen, der an die Fläche des Bereiches des Trägers angepasst ist, der dafür vorgesehen ist, die schematische Darstellung anzuordnen, und gleichzeitig ermöglichen, die gepaarten Routenelemente beiderseits der Orientierungsachse zueinander auszurichten (305).

5. System zur Erzeugung von Routenkarten nach Anspruch 4, welches außerdem ein Modul zur Analyse des Kartenanzeige-Trägers (21) aufweist, um die verfügbare Fläche zum Anzeigen der Routenkarte zu bestimmen.

6. System zur Erzeugung von Routenkarten nach einem der Ansprüche 4 oder 5, welches außerdem ein Modul zur Transformation der Streckenabschnitte (40) aufweist, welches ermöglicht, mindestens eines der Anordnungsmerkmale von mindestens einem Teil der Streckenabschnitte in Abhängigkeit von einerseits den axialen Positionen der Anweisungen (410) und andererseits der für die schematische Darstellung verfügbaren Fläche zu modifizieren.

7. System zur Erzeugung von Routenkarten nach Anspruch 6, wobei die Anordnungsmerkmale der Streckenabschnitte umfassen:
- die Positionierungswinkel der Streckenabschnitte relativ zueinander;
- die Profile der Streckenabschnitte;
- die relativen Längen der Streckenabschnitte.

8. System zur Erzeugung von Routenkarten nach einem der Ansprüche 4 bis 7, welches außerdem aufweist:
• ein Manöverdetektionsmodul zum Detektieren der Manöver, die durchgeführt werden müssen, um die Route zurückzulegen;
• ein Anweisungsbestimmungsmodul zum Liefern der Anweisungen, die den einzelnen Manövern entsprechen.

## Claims

1. Method for the automatic generation of route maps for a route map generation system having access to digital road mapping data of the road sections and nodes making it possible to reconstitute a representation of a computed route in relation with at least one given geographical area and making it possible to determine a plurality of route maps in this area, including the steps consisting in:
• receiving a route to be mapped (101);
• detecting, using a manoeuvre detection module (14), the manoeuvres making it possible to perform the route (102), each manoeuvre corresponding to a driving action of a vehicle making it possible to select a given road section when the driver is faced with a plurality of possible road sections to take;
• obtaining, using an instruction determination module (17), the instruction data corresponding to the manoeuvres to be performed (103);
• generating a continuous route track (600) including schematic representations (501) of the manoeuvres to be performed;
• forming pairs of paired route elements composed on the one hand of the written instructions making it possible to explain to the driver the manoeuvres to be performed throughout the route, and on the other hand corresponding manoeuvres for displaying in schematic form;
• performing a formatting of the route data for an arrangement on a medium including the steps consisting in:
• defining, using a module for defining an axis of orientation and areas of the medium (24), an axis of orientation (A-A) serving to orient the arrangement of the route data on the medium (202) and two areas (400, 500) on the medium (203) a first area (400) for the instruction data (410), in written format, and a second area (500) for the schematic representation (501) of the corresponding manoeuvres positioned on the corresponding areas of the route, interlinked so as to form a continuous route track (600), the instructions and the schematic representations of the manoeuvres being arranged in scheduled chronological order of execution following the axis of orientation (A-A);
• arranging the road sections of the route so as to procure an orientation substantially along the axis of orientation for the schematic representation of the route;
• formatting, using a route element formatting module (27), the schematic representation of the route so that the features of arrangement of said road sections make it possible to generate a route track (600) adapted to the scheduled surface of the area of the medium provided to arrange said schematic representation, while making it possible to align the paired route elements on each side of the axis of orientation (304);
• aligning the written instructions and the paired schematic representations on either side of the axis of orientation.

2. Method for the automatic generation of route maps according to Claim 1, wherein the formatting of the route includes a transformation step making it possible to modify at least one of the features of arrangement of at least part of the road sections as a function on the on hand of the axial positions of the written instructions (410) and on the other hand of the surface available for the schematic representation.

3. Method for the automatic generation of route maps according to Claim 2, wherein the features of arrangement of the road sections comprise:
- the angles of positioning of the road sections with respect to one another;
- the profiles of the road sections;
- the relative lengths of the road sections.

4. System for generating route maps for the implementation of the method according to one of Claims 1 to 3, including access to road mapping data (50) in relation with at least one given geographical area and making it possible to determine a plurality of route maps in this area, at least one microprocessor and at least one work memory, a route computation module (11), and moreover including:
• a module for defining an axis of orientation and areas of the medium (24), for defining an axis of orientation serving to orient the arrangement of the instructions on the medium;
• a route subdivision module (30), for subdividing the route to be mapped into a plurality of single sections;
• a route element formatting module (27), for formatting the schematic representation of the route so that the features of arrangement of said road sections make it possible to generate a route track (600) adapted to the surface of the medium scheduled for arranging said schematic representation, while making it possible to align the paired route elements on each side of the axis of orientation (305).

5. System for generating route maps according to Claim 4, moreover comprising a module (21) for analyzing the map display medium, for determining the surface available for displaying the route map.

6. System for generating route maps according to one of Claims 4 or 5, moreover comprising a road section transformation module (40), making it possible to modify at least one of the features of arrangement of at least part of the road sections as a function on the one hand of the axial positions of the instructions (410) and on the other hand of the surface available for the schematic representation.

7. System for generating route maps according to Claim 6, wherein the features of arrangement of the road sections comprise:
- the angles of positioning of the road sections with respect to one another;
- the profiles of the road sections;
- the relative lengths of the road sections.

8. System for generating route maps according to any one of Claims 4 to 7, moreover comprising:
• a manoeuvre detection module, for detecting the manoeuvres to be performed to travel the route;
• an instruction determination module, for supplying the instructions corresponding to each of the manoeuvres.
